# EUROPEAN PATENT SPECIFICATION

(11) **EP 4 056 597 B1**
(45) Date of publication and mention of the grant of the patent: **18.06.2025**
(21) Application number: 20901090.9
(22) Date of filing: 09.10.2020
(51) Int. Cl.: C08B 15/02, D21H 11/18, D21H 11/20, D21H 15/02, C08B 15/04, C08L 1/04, D21C 9/00

(54) **CELLULOSE NANOFIBER MANUFACTURING METHOD AND CELLULOSE NANOFIBER**
ZELLULOSEHERSTELLUNGSVERFAHREN UND ZELLULOSE-NANOFASER
PROCÉDÉ DE FABRICATION DE NANOFIBRES DE CELLULOSE ET NANOFIBRE DE CELLULOSE

(30) Priority: 16.12.2019 JP 2019226519
(43) Date of publication of application: 14.09.2022
(73) Proprietor: Unicharm Corporation, Shikokuchuo-shi, Ehime 799-0111 (JP)
(72) Inventor: KONISHI, Takayoshi, Kanonji-shi, Kagawa 769-1602 (JP); BANDOH, Takeshi, Kanonji-shi, Kagawa 769-1602 (JP); YAMAKI, Kouichi, Kanonji-shi, Kagawa 769-1602 (JP); KURITA, Noritomo, Kanonji-shi, Kagawa 769-1602 (JP)
(74) Representative: Dolleymores
(86) International application number: PCT/JP2020/038368
(87) International publication number: WO 2021/124655

(56) References cited:
- EP-A1- 3 560 964
- WO-A1-2019/003655
- WO-A1-2019/003655
- WO-A1-2020/096013
- WO-A1-2020/141589
- JP-A- 2010 254 726
- JP-A- 2012 193 353
- JP-A- 2019 131 725

## Description

### FIELD

The present invention relates to a method of manufacturing cellulose nanofiber, and a cellulose nanofiber thus obtained.

### BACKGROUND

A method of manufacturing cellulose nanofibers and cellulose nanofibers are known. For example, Patent Literature 1 discloses a method of manufacturing cellulose nanofibers. In a method of manufacturing the cellulose nanofibers, pulp fibers in a pulp slurry are subjected to refining treatment using a manufacturing apparatus of cellulose nanofibers including a high-pressure homogenizer. The manufacturing method includes a pretreatment step and a refinement step, and the pretreatment step includes a chemical treatment step and a coarse defibration step. The order of the chemical treatment step and the coarse defibration step is not particularly limited, and may be performed at the same time. The chemical treatment step is a step of performing an oxidation treatment or the like with respect to pulp fibers in a pulp slurry. The oxidizing agent used in the oxidation treatment includes ozone, hypochlorous acid or a salt thereof, and persulfate or a salt thereof, and is preferably persulfate or a salt thereof, and an oxidation catalyst such as an N-oxyl compound (for example: TEMPO (2,2,6,6-tetramethylpiperidine 1-oxyl)) can be used in combination.

### [CITATION LIST]

### [PATENT LITERATURE]

Patent Literature 1: Japanese Unexamined Patent Publication No. 2018-100474
WO 2019/003655 A1 relates to a method for producing pulp fibers for cellulose nanofiberizationfrom pulp fibers of used sanitary products.
EP 3560964 A1 discloses acid-type carboxylated cellulose nanofibers and a method for preparation of cellulose nanofibers from raw cellulose material.

### SUMMARY

### [TECHNICAL PROBLEM]

The manufacturing method of Patent Literature 1 includes a chemical treatment step, a coarse defibration step, and a refinement step. That is, in this manufacturing method, a plurality of mechanical defibration treatments (a coarse defibration step and a refinement step) are performed after the chemical treatment. However, according to studies by the inventors, in a manufacturing method based on such a mechanical defibration treatment, it is difficult to finely defibrate pulp fibers into cellulose nanofibers, and it is difficult to improve dispersibility or transparency. Here, in a case of using the oxidation treatment as the chemical treatment, it can be considered that, in a case where a catalyst such as an N-oxyl compound (for example: TEMPO) is used in combination, the oxidation reaction is accelerated, which makes it easier to perform the subsequent defibration treatment and makes it possible to easily make the pulp fibers into cellulose nanofibers. However, the cellulose nanofibers obtained by the treatment is modified cellulose nanofibers obtained by modifying a primary hydroxyl group (-CH₂ OH group) of cellulose with a catalyst such as an N-oxyl compound which is a modifying agent. Accordingly, there is a possibility that the catalyst such as a toxic N-oxyl compound which is a modifying agent remains in the cellulose nanofibers. Therefore, there is a possibility that the manufacturing method raises safety and environmental concerns regarding cellulose nanofibers.

An aspect of the present invention is to provide a method of manufacturing a cellulose nanofiber capable of manufacturing a high-quality cellulose nanofiber, which are less likely to cause safety and environmental concerns, and a cellulose nanofiber thus obtained.

### [SOLUTION TO PROBLEM]

The present invention relates to a method of manufacturing a cellulose nanofiber from a pulp fiber, the method including an ozone treatment step of performing an ozone treatment on the pulp fiber in a first aqueous solution; and a defibration treatment step of performing a physical defibration treatment on an ozone-treated pulp fiber in a second aqueous solution, wherein, in the manufacturing method, the ozone treatment step and the defibration treatment step are continuously performed a plurality of times to form the cellulose nanofiber having a hemicellulose content less than 8.0 mass% and a lignin content of 0.10 mass% or less.

The present invention relates to the cellulose nanofiber containing fibrous cellulose, manufactured by the manufacturing method of the invention, wherein the fibrous cellulose is chemically modified only by oxidation without a counter ion, and a hemicellulose content is less than 8.0 mass% and a lignin content is 0.10 mass% or less.

### [ADVANTAGEOUS EFFECT OF THE INVENTION]

According to the present invention, a method of manufacturing a cellulose nanofiber capable of manufacturing a high-quality cellulose nanofiber, which are less likely to cause safety and environmental concerns, and a cellulose nanofiber thus obtained can be provided.

### BRIEF DESCRIPTION OF DRAWINGS

FIG. 1 is a flow chart showing an example of a method of manufacturing cellulose nanofibers according to an embodiment.
FIG. 2 is a block diagram showing a configuration example of an apparatus which performs an ozone treatment step and a defibration treatment step of the method of manufacturing cellulose nanofibers according to the embodiment.
FIG. 3 is a block diagram showing a configuration example of another apparatus which performs an ozone treatment step and a defibration treatment step of the method of manufacturing cellulose nanofibers according to the embodiment.
FIG. 4 is a flow chart showing an example of a supply step of the method of manufacturing cellulose nanofibers according to the embodiment.

### DESCRIPTION OF EMBODIMENTS

The present embodiment relates to the following aspects.

### [Aspect 1]

A manufacturing method of manufacturing a cellulose nanofiber from a pulp fiber, the method comprising: an ozone treatment step of performing an ozone treatment on the pulp fiber in a first aqueous solution; and a defibration treatment step of performing a physical defibration treatment on an ozone-treated pulp fiber in a second aqueous solution, wherein in the manufacturing method, the ozone treatment step and the defibration treatment step are continuously performed a plurality of times to form the cellulose nanofiber having a hemicellulose content less than 8.0 mass% and a lignin content of 0.10 mass% or less.

In the present manufacturing method, in the ozone treatment step, the pulp fibers are oxidized by ozone treatment, thereby decomposing and removing lignin and/or hemicellulose mainly in the vicinity of the surfaces of the pulp fibers. At the same time, a primary hydroxyl group (-CH₂ OH group) in cellulose exposed already or cellulose mainly in the vicinity of surface exposed by removing lignin is preferentially oxidized, thereby reducing hydrogen bonds derived from the primary hydroxyl group among cellulose molecules. Therefore, in the defibration treatment step subsequent to the ozone treatment step, cellulose mainly in the vicinity of the surface of the pulp fibers can be easily defibrated by the physical defibration treatment. In the next ozone treatment step subsequent thereto, lignin and the like in the vicinity of the surface of the pulp fibers are already removed, and accordingly, the pulp fibers are oxidized by the ozone treatment, thereby decomposing and removing lignin and the like in a deeper part of the pulp fibers. At the same time, a primary hydroxyl group in the cellulose in a deeper part where lignin and the like are removed and exposed are oxidized, thereby reducing hydrogen bonds derived from the primary hydroxyl group between cellulose molecules. Therefore, in the next defibration treatment step subsequent to the ozone treatment step, cellulose mainly in a deeper part of the pulp fibers can be easily defibrated by the physical defibration treatment. As described above, in the present manufacturing method, the ozone treatment step and the defibration treatment step are continuously performed a plurality of times, which makes it possible to remove lignin or hemicellulose to the deeper part of the pulp fibers and to perform the defibration while decreasing the lignin content to 0.10 mass% or less and the hemicellulose content to less than 8.0 mass%, respectively. Accordingly, this makes it possible to efficiently manufacture high-quality cellulose nanofibers having a nano-order size and high dispersibility or transparency. Since no catalyst such as an N-oxyl compound is used in the present manufacturing method, the manufactured cellulose nanofibers do not contain a catalyst such as a toxic N-oxyl compound, and accordingly, safety or environmental aspect of the cellulose nanofibers can be improved.

### [Aspect 2]

The manufacturing method according to the aspect 1, wherein the ozone treatment step includes a step of supplying the ozone-treated pulp fiber to the defibration treatment step together with the first aqueous solution, and the defibration treatment step includes a step of defibrating the ozone-treated pulp fiber in the first aqueous solution as the second aqueous solution.

In the present manufacturing method, the first aqueous solution containing the pulp fibers subjected to the ozone treatment step is supplied to the defibration treatment step as the second aqueous solution, which makes it possible to continuously perform both treatment steps. Accordingly, this makes it possible to efficiently perform the defibration treatment, to make it possible to efficiently manufacture high-quality cellulose nanofibers.

### [Aspect 3]

The manufacturing method according to the aspect 1 or 2, wherein the defibration treatment step includes a step of supplying the defibrated pulp fiber to the ozone treatment step together with the second aqueous solution, and the ozone treatment step includes a step of performing an ozone treatment on the defibrated pulp fiber in the second aqueous solution as the first aqueous solution.

In the present manufacturing method, the second aqueous solution containing the pulp fibers subjected to the defibration treatment step is supplied to the ozone treatment step as the first aqueous solution, which makes it possible to continuously perform both treatment steps. Therefore, the ozone treatment can be efficiently performed, which makes it possible to efficiently manufacture high-quality cellulose nanofibers.

### [Aspect 4]

The manufacturing method according to any one of the aspects 1 to 3, wherein a concentration of the pulp fiber in the first aqueous solution and the second aqueous solution is 1 to 20 mass%.

In the present manufacturing method, the concentration of the pulp fibers in each aqueous solution is 1 to 20 mass%, which makes it possible to broadly disperse the pulp fibers in the aqueous solution. Accordingly, this makes it possible to efficiently perform the ozone treatment and the defibration treatment, to make it possible to efficiently manufacture high-quality cellulose nanofibers. In a case where the concentration of the pulp fibers is more than 20 mass%, it is difficult to broadly disperse, and there is a risk that pulp fibers on which each treatment is not sufficiently performed are generated. In a case where the concentration thereof is less than 1 mass %, there is a risk that an energy for each treatment is wasted and, in the defibration treatment step, defibration efficiency of the pulp fibers is deteriorated.

### [Aspect 5]

The manufacturing method according to any one of aspects 1 to 4, wherein the pulp fiber includes a kraft pulp fiber.

In the present manufacturing method, the pulp fibers include kraft pulp fibers. Here, kraft pulp fibers, which are generally inexpensive and widely used, have a low degree of purification and a high content of hemicellulose or lignin. Therefore, in the present manufacturing method, the content of hemicellulose or lignin can be greatly decreased by repeatedly performing the ozone treatment and the defibration treatment on such kraft pulp fibers. Accordingly, this makes it possible to efficiently manufacture high-quality cellulose nanofibers even from the kraft pulp fibers having a high content of hemicellulose or lignin.

### [Aspect 6]

The manufacturing method according to any one of aspects 1 to 5, wherein the pulp fiber include a pulp fiber derived from a used sanitary product.

In the present manufacturing method, the pulp fibers derived from the used sanitary product, that are, recycled pulp fibers are used, which makes it possible, not only to use the pulp fibers as a sanitary product, but also to reuse the pulp fibers as the cellulose nanofibers afterwards. That is, the pulp fiber can be efficiently used and can also contribute to reduction of an environmental load. In addition, in a case where the sanitary product contains a super absorbent polymer, the super absorbent polymer may remain in the recycled pulp fibers. However, in the present manufacturing method, since the ozone treatment step is provided, even in a case where the super absorbent polymer remains in the recycled pulp fibers, the super absorbent polymer can be removed by decomposing and solubilizing the super absorbent polymer by the ozone treatment. In other words, a step for removing the super absorbent polymer remaining in the recycled pulp fibers can also be used as the ozone treatment step. Accordingly, this makes it possible to efficiently manufacture high-quality cellulose nanofibers.

### [Aspect 7]

The manufacturing method according to any one of aspects 1 to 6, wherein the first aqueous solution is acidic or neutral.

In the present manufacturing method, the first aqueous solution used in the ozone treatment step is acidic or neutral. Accordingly, this makes it less likely to deactivate ozone, which makes it possible to more accurately oxidize, decompose, and remove lignin and the like. Accordingly, this makes it possible to efficiently manufacture high-quality cellulose nanofibers.

### [Aspect 8]

A cellulose nanofiber containing fibrous cellulose, obtained by the manufacturing method of the present invention, wherein the fibrous cellulose is chemically modified only by oxidation without a counter ion, and a hemicellulose content is less than 8.0 mass% and a lignin content is 0.10 mass% or less.

In the present cellulose nanofibers, the fibrous cellulose is chemically modified only by oxidation without a counter ion. Here, the chemical modification by only the oxidation without the counter ion means that the primary hydroxyl group (-CH₂OH) of cellulose is selectively converted (oxidized) into a carboxy group (-COOH). On the other hand, in the chemical modification of cellulose by TEMPO oxidation with a catalyst of an N-oxyl compound, the primary hydroxyl group (-CH₂OH) of cellulose is selectively converted into the sodium salt of the carboxy group (-COOH), and accordingly, the counter ion (for example: a Na ion) is bonded to the converted carboxy group. Accordingly, the cellulose nanofibers are not formed using a modifying agent such as a catalyst such as a toxic N-oxyl compound and accordingly, since the cellulose nanofibers do not include such a modifying agent, the cellulose nanofibers can be safely used. In addition, since the hemicellulose content is less than 8.0 mass% and the lignin content is 0.10 mass% or less, these can be referred to as cellulose nanofibers having high dispersibility and transparency. Therefore, the present cellulose nanofibers can be referred to as high-quality cellulose nanofibers that can be used for a broad range of applications.

### [Aspect 9]

The cellulose nanofiber according to the aspect 8, wherein the fibrous cellulose has a specific surface area of 200 to 250 cm².

In the present cellulose nanofibers, since the specific surface area of fibrous cellulose is high and the price is low, these can be referred to as high-quality cellulose nanofibers that can be used for a broader range of applications.

### [Aspect 10]

The cellulose nanofiber according to the aspect 8 or 9, wherein 50% or more of the fibrous cellulose has a fiber diameter of 1 to 10 nm.

In the present cellulose nanofibers, since 50% or more (the number) of the cellulose nanofibers has a fiber diameter of 1 to 10 nm, these can be referred to as cellulose nanofibers having high dispersibility and transparency. Therefore, the present cellulose nanofibers can be referred to as cellulose nanofibers having higher quality.

### [Aspect 11]

The cellulose nanofiber according to any one of the aspects 8 to 10, wherein the fibrous cellulose contains an acid.

In the cellulose nanofibers according to claim 11, the fibrous cellulose contains acid, and, for example, citric acid is attached to a surface of the cellulose. In such a case, since the cellulose nanofibers have a weak acidity, an antimicrobial effect can be obtained and, at the same time, skin roughness can be suppressed in applications that come into contact with the skin surface of humans.

### [Aspect 12]

The cellulose nanofiber according to any one of the aspects 8 to 11, wherein the fibrous cellulose is derived from a pulp fiber of a used sanitary product.

In the present cellulose nanofibers, the fibrous cellulose is derived from the pulp fibers of the used sanitary product. Accordingly, not only the use of the pulp fibers as a sanitary product, but also the reuse of the pulp fibers as cellulose nanofibers can be carried out afterwards. That is, it makes it possible to efficiently use the pulp fibers and contribute to reducing the environmental load.

Hereinafter, a method of manufacturing cellulose nanofibers according to an embodiment will be described.

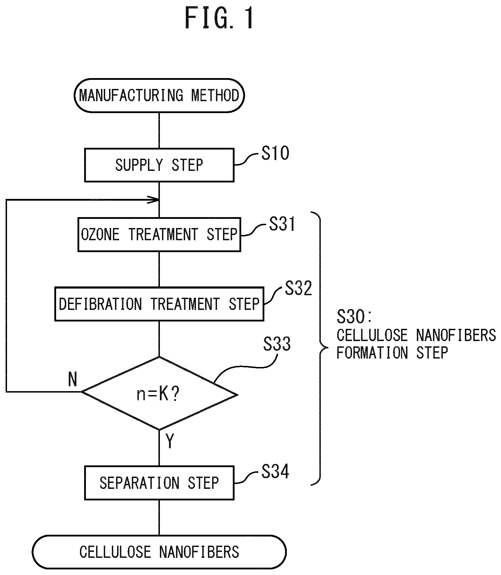

FIG. 1 is a flow chart showing an example of a method of manufacturing cellulose nanofibers according to an embodiment. The method of manufacturing cellulose nanofibers includes an ozone treatment step S31 and a defibration treatment step S32, and the ozone treatment step S31 and the defibration treatment step S32 are continuously performed a plurality of times (K times: K is a natural number of 2 or more). Accordingly, in the manufacturing method, cellulose nanofibers having a hemicellulose content less than 8.0 mass% and a lignin content of 0.10 mass% or less are manufactured. This manufacturing method preferably further include a supply step S10 and/or a separation step S34. The ozone treatment step S31, the defibration treatment step S32, (a number-of-times checking step S33), and the separation step S34 may be referred to as a cellulose nanofibers formation step S30. Hereinafter, each step will be specifically described.

In the supply step S10, pulp fibers are prepared and supplied to the ozone treatment step S31.

The pulp fibers are not particularly limited, as long as these are fibers derived from a plant that can be used as a raw material for cellulose nanofibers, and, for example, a cellulose-based fibers can be used. Examples of the cellulose-based fibers include wood pulp, crosslinked pulp, non-wood pulp, regenerated cellulose, semisynthetic cellulose, and the like, and wood pulp is preferable. Examples of the wood pulp include virgin pulp fibers derived from softwood or hardwood (for example, kraft pulp (NBKP, LBKP, NKP, and the like)), and regenerated fibers, that are recycled pulp fibers which are used at least once as a material such as an absorbent body of a sanitary product or paper and then regenerated for reuse. Among these, in a case where the pulp fibers are pulp fibers used in a sanitary product, that are, pulp fibers derived from a used sanitary product, the supply step S10 includes a step of regenerating the pulp fibers derived from the used sanitary product.

In the present embodiment, the pulp fibers include the kraft pulp fibers (for example, NBKP). Here, kraft pulp fibers, which are generally inexpensive and widely used, have a low degree of purification and a high content of hemicellulose or lignin. Therefore, in the present manufacturing method, the content of hemicellulose or lignin can be greatly decreased by repeatedly performing the ozone treatment step S31 and the defibration treatment step S32 on such kraft pulp fibers. Accordingly, this makes it possible to efficiently manufacture high-quality cellulose nanofibers even from the kraft pulp fibers having a high content of hemicellulose or lignin.

In the ozone treatment step S31, the ozone treatment is performed on the pulp fibers in an aqueous solution (first aqueous solution). That is, in the ozone treatment step S31, an ozone gas is supplied into the aqueous solution to generate ozone water mixed with ozone, or ozone water is prepared in advance, and the pulp fibers are immersed in the ozone water, thereby performing the ozone treatment on the pulp fibers. By treating the pulp fibers with ozone water, this makes it possible to bring ozone into contact with organic matters such as lignin or hemicellulose that is attached to a surface of the pulp fibers or the vicinity of the surface thereof (inside where the aqueous solution can enter). As a result, these organic matters such as lignin and the like are oxidatively decomposed with ozone, solubilized in the aqueous solution, and easily removed from the pulp fibers. At the same time, the surface or the vicinity of the surface of the pulp fibers are fibrillated. Due to that, in the pulp fibers, the fibrillation is promoted and a specific surface area is increased.

In addition, in a case where pulp fibers derived from the used sanitary product are used as the pulp fibers, the ozone treatment step S31 makes it possible to obtain an effect of removing impurities, in addition to promoting the fibrillation or increasing the specific surface area described above. That is, by the ozone treatment step S31, the impurities such as excrement or a super absorbent polymer attached to the surface or an inner portion of the pulp fibers are easily oxidatively decomposed, solubilized in an aqueous solution, and thus removed from the pulp fibers. Accordingly, this makes it possible to sterilize and bleach the pulp fibers.

In the ozone treatment step S31, a concentration of the pulp fibers contained in the ozone water is preferably 1 to 20 mass%, more preferably 1.5 to 15 mass%, and even more preferably 2 to 10 mass% with respect to 100 mass% of the ozone water. Accordingly, this makes it possible to broadly disperse the pulp fibers in the ozone water. In a case where the concentration of the pulp fibers is lower than 1 mass%, the ozone is concentrated in a small amount of pulp fibers and unnecessary damage is likely to be caused to the pulp fibers, and in a case where the concentration thereof is higher than 20 mass %, it is difficult to broadly disperse the pulp fibers in the ozone water and it is likely to generate pulp fibers that are not sufficiently treated with ozone.

In the ozone treatment step S31, the concentration of ozone contained in the ozone water is preferably 1 to 200 ppm by mass, more preferably 2 to 100 ppm by mass, and even more preferably 3 to 50 ppm by mass. Accordingly, this makes it possible to appropriately perform the ozone treatment on the pulp fibers. In a case where the concentration of ozone is lower than 1 ppm by mass, it is difficult to remove organic matters such as lignin in the pulp fibers, and in a case where the concentration thereof is higher than 200 ppm by mass, unnecessary damage is likely to be caused to the pulp fibers. In addition, a treatment time with ozone is shortened in a case where the concentration of ozone contained in ozone water is high, and increased in a case where the concentration thereof is low, and is typically 5 to 120 minutes. The product of the concentration (ppm by mass) of ozone contained in ozone water and the treatment time (min) (hereinafter, also referred to as a "CT value") is preferably from 100 to 6000 (mass) ppm-min, more preferably from 200 to 4000 ppm-min, and even more preferably from 300 to 2000 ppm-min. In a case where the CT value is lower than 100 ppm·min, it is difficult to remove the organic matters such as lignin in the pulp fibers, and in a case where the CT value is higher than 6000 ppm·min, it is easy to cause unnecessary damage to the pulp fibers.

In the ozone treatment step S31, in order to evenly progress a reaction, the ozone water containing the pulp fibers may be stirred. In the ozone treatment step S31, the temperature of the ozone water is not particularly limited and is, for example, room temperature (25°C) and preferably 10°C to 40°C. In a case where the temperature of the ozone water is lower than 10°C, the progress of the reaction with ozone becomes slow, and in a case where the temperature thereof is higher than 40°C, the ozone in the ozone water is likely to escape as a gas, which makes it less likely to cause the reaction with ozone.

In the ozone treatment step S31, the ozone water containing ozone is used, but other oxidizing agents capable of oxidizing, decomposing, and removing organic matters such as lignin and the like which are attached to the surface or the vicinity of the surface of the pulp fibers may be used in combination with ozone. Examples of such an oxidizing agent include hydrogen peroxide and peracetic acid.

The ozone water is not particularly limited, as long as it is an aqueous solution containing ozone (first aqueous solution), and examples of the aqueous solution include water itself (neutral) and an acidic aqueous solution. In a case of using the acidic aqueous solution as the aqueous solution, deactivation or gasification of ozone in ozone water can be suppressed. Accordingly, the ozone can easily reach the surface of the pulp fibers or the inner portion in the vicinity of the surface thereof, which makes it possible to oxidatively decompose, solubilize, and remove the organic matters such as lignin and the like, on the surface of the pulp fibers or the inner portion in the vicinity of the surface thereof. In addition, in a case where the pulp fibers are pulp fibers derived from the used sanitary product, the acidic aqueous solution as the aqueous solution can inactivate the super absorbent polymer attached to the pulp fibers. Therefore, the super absorbent polymer attached to the pulp fibers can be easily oxidatively decomposed, solubilized, and removed together with excrement and other organic matters by ozone. The acidic aqueous solution has a predetermined pH that is acidic (lower than 7.0) and preferably lower than 7.0. The upper limit of the pH is preferably 4.0 and more preferably 3.5. In a case where the ozone treatment step S31 and the defibration treatment step S32 are continuously performed a plurality of times, the first aqueous solution of the ozone treatment step S31 may be the same as the second aqueous solution of the defibration treatment step S32 or may contain the second aqueous solution.

The specific configuration of an ozone treatment apparatus of the ozone treatment step S31 is not particularly limited, as long as the pulp fibers can be brought into contact with (or immersed in) the ozone water. The ozone treatment apparatus includes, for example, a treatment tank that stores the ozone water and an ozone supply apparatus that supplies ozone into the treatment tank. In the ozone treatment apparatus, for example, the pulp fibers are put into the treatment tank from the upper part or lower part of the treatment tank, ozone is supplied into the treatment tank from the lower part of the treatment tank, and the pulp fibers and the ozone water are mixed together and brought into contact with each other in the treatment tank. The ozone water may be generated in the treatment tank by the mixing of water or an aqueous solution and ozone (gas) in the treatment tank. Examples of an ozone generation apparatus include an ozone water exposure tester ED-OWX-2 manufactured by Ecodesign Co., Ltd., an ozone generation apparatus OS-25V manufactured by Mitsubishi Electric Corporation, and the like.

In the present embodiment, subsequently, the pulp fibers ozone-treated in the ozone treatment step S31 are transported to the defibration treatment step S32 together with the aqueous solution used in the ozone treatment step S31 with a pump or the like. Here, in a case where the pulp fibers are dried while the pulp fibers are transported, there is a risk that branches or fluff portions of the pulp fibers are torn off or branches or fluff portions are re-joined to each other. Therefore, in the present embodiment, in a case where the pulp fibers are transported from the ozone treatment step S31 to the defibration treatment step S32, the pulp fibers are continuously held in the aqueous solution (first aqueous solution) and transported while maintaining a wet state. In such a case, it is difficult to separate branches or fluff portions, and the pulp fibers are transported while maintaining a fibrillated state. Then, in the defibration treatment step S32, the ozone-treated pulp fibers are defibrillated in the first aqueous solution or an aqueous solution containing the first aqueous solution as the second aqueous solution. In another embodiment, the pulp fibers are separated from the first aqueous solution (solid-liquid separation) by a sieve (or mesh) or the like, transported to the defibration treatment step S32, and supplied to the second aqueous solution different from the first aqueous solution.

In the defibration treatment step S32, the ozone-treated pulp fibers are subjected to a physical defibration treatment in an aqueous solution (second aqueous solution). That is, in the defibration treatment step S32, the pulp fibers are beaten in the aqueous solution. At this time, since lignin, hemicellulose, and the like that are attached to the surface or the vicinity of the surface are removed in the ozone treatment step S31, the pulp fibers are more easily diverged into a branched shape and fibrillated. That is, pulp fibers having a small fiber diameter are likely to be generated, and the inner portion of the pulp fibers are likely to be exposed.

In the defibration treatment step S32, a concentration of the pulp fibers contained in the aqueous solution is preferably 1 to 20 mass%, more preferably 1.5 to 15 mass%, and even more preferably 2 to 10 mass% with respect to 100 mass% of the aqueous solution. Accordingly, this makes it possible to broadly disperse the pulp fibers in the aqueous solution. In a case where the concentration of the pulp fibers is lower than 1 mass%, it is difficult to physically defibrate the pulp fibers, which deteriorates defibration efficiency of the pulp fibers, and in a case where the concentration thereof is higher than 20 mass%, it is difficult to broadly disperse the pulp fibers in the aqueous solution, which makes it likely to generate unevenness in the defibration of the pulp fibers.

The aqueous solution (second aqueous solution) is not particularly limited, as long as it contains water and does not cause an effect such as damage or the like on the apparatus which performs the defibration treatment step S32 or the pulp fibers, and for example, water itself (neutral) or an acidic aqueous solution can be used. In a case where the acidic aqueous solution is used as the aqueous solution, the acidic aqueous solution can reach and remain in the surface of the pulp fibers or the inner portion in the vicinity of the surface thereof. Therefore, in a case where the pulp fibers are treated with ozone water in the ozone treatment step S31 afterwards, the acidic aqueous solution remaining on the surface or in the inner portion thereof makes it possible to make the ozone that has reached the surface or inner portion thereof less likely to be deactivated and makes it possible to make the function of the ozone sufficiently exhibited. In addition, in a case where the pulp fibers are pulp fibers derived from the used absorbent article, when the acidic aqueous solution is used as the aqueous solution, the super absorbent polymer attached to the pulp fibers can be easily inactivated with the acidic aqueous solution. Therefore, in a case where the ozone treatment step S31 is performed subsequently, the inactivated super absorbent polymer can be easily oxidatively decomposed with ozone, and can be solubilized and removed. The acidic aqueous solution has a predetermined pH that is acidic (lower than 7.0) and preferably lower than 7.0. The upper limit of the pH is preferably 4.0 and more preferably 3.5. In a case where the ozone treatment step S31 and the defibration treatment step S32 are continuously performed a plurality of times, the second aqueous solution of the defibration treatment step S32 may be the same as the first aqueous solution of the ozone treatment step S31 or may contain the first aqueous solution.

A specific configuration of a defibration treatment apparatus that executes the defibration treatment step S32 is not particularly limited, as long as the pulp fibers can be physically defibrated (beaten). The defibration treatment apparatus is, for example, a conical-type or disk-type refiner. A blade pattern, the number of rotations, and the like of the apparatus are appropriately changed depending on a degree of cutting or fibrillation of the pulp fibers.

A temperature at which the defibration treatment step S32 is executed is not particularly limited and is, for example, room temperature (25°C) and preferably 10°C to 40°C. The number of passes of the pulp fibers through the defibration treatment apparatus is, for example, 1 to 6 times, and preferably 2 to 4 times. The pressure in the defibration treatment is, for example, 0.07 to 0.11 MPa.

In the present manufacturing method, the ozone treatment step S31 and the defibration treatment step S32 are continuously performed a plurality of times (K times: K is a natural number of 2 or more). In other words, the continuous treatment of the ozone treatment step S31 and the defibration treatment step S32 is repeated (S33) until the number of times n of the continuous treatment formed of the ozone treatment step S31 and the defibration treatment step S32 is equal to K (n = K?). For example, K is 2 or 3.

In a case where the ozone treatment step S31 and the defibration treatment step S32 are performed again after the defibration treatment step S32 (S33: No), in the present embodiment, the pulp fibers defibrated in the defibration treatment step S32 are transported to the ozone treatment step S31 together with the aqueous solution used in the defibration treatment step S32 with a pump or the like. Here, in a case where the pulp fibers are dried while the pulp fibers are transported, there is a risk that branches or fluff portions of the pulp fibers are torn off or branches or fluff portions are re-joined to each other. Therefore, in the present embodiment, in a case where the pulp fibers are transported from the defibration treatment step S32 to the ozone treatment step S31, the pulp fibers are continuously held in the aqueous solution (second aqueous solution) and transported while maintaining a wet state. In such a case, it is difficult to separate branches or fluff portions, and the pulp fibers are transported while maintaining a fibrillated state. Then, in the ozone treatment step S31, the defibrated pulp fibers are treated with ozone water in the second aqueous solution or an aqueous solution containing the second aqueous solution as the first aqueous solution. In another embodiment, the pulp fibers are separated from the second aqueous solution (solid-liquid separation) by a sieve (or mesh) or the like, transported to the ozone treatment step S31, and supplied to the first aqueous solution different from the second aqueous solution.

After the ozone treatment step S31 and the defibration treatment step S32 are performed a predetermined number of times (K times) (S33: Yes), in the present embodiment, the separation step S34 is performed. In the separation step S34, the pulp fibers are separated from the second aqueous solution (solid-liquid separation) by a sieve (or mesh) or the like, and, if necessary, are dehydrated. Accordingly, the cellulose nanofibers are extracted. The separation step S34 may include a drying step. In the drying step, for example, the pulp fibers are dried with dry air. A temperature of the dry air is, for example, room temperature (for example, 25°C) to 150°C and preferably 70°C to 120°C. In a case where the temperature of the dry air is excessively low, the drying time is likely to increase, and in a case where the temperature of the dry air is excessively high, the cellulose nanofibers are likely to be damaged. The drying time may be, for example, 30 to 300 minutes.

The cellulose nanofibers are manufactured by the manufacturing method described above. The cellulose nanofibers have a hemicellulose content less than 8.0 mass%, and a lignin content of 0.10 mass % or less.

In the present manufacturing method, in the ozone treatment step S31, the pulp fibers are oxidized by ozone treatment, whereby lignin and/or hemicellulose in the vicinity of the surface of the pulp fibers are mainly decomposed and removed. At the same time, a primary hydroxyl group (-CH₂ OH group) in cellulose exposed already or cellulose mainly in the vicinity of surface exposed by removing lignin is preferentially oxidized, thereby reducing hydrogen bonds derived from the primary hydroxyl group among cellulose molecules. Therefore, in the defibration treatment step S32 subsequent to the ozone treatment step S31, cellulose mainly in the vicinity of the surface of the pulp fibers can be easily defibrated by the physical defibration treatment. In the next (second or later) ozone treatment step S31 subsequent thereto, lignin and the like in the vicinity of the surface of the pulp fibers are already removed, and accordingly, the pulp fibers are oxidized by the ozone treatment, thereby decomposing and removing lignin and the like in a deeper part of the pulp fibers. At the same time, a primary hydroxyl group in the cellulose in a deeper part where lignin and the like are removed and exposed are oxidized, thereby reducing hydrogen bonds derived from the primary hydroxyl group between cellulose molecules. Therefore, in the next (second or later) defibration treatment step S32 subsequent to the ozone treatment step S31, cellulose mainly in a deeper part of the pulp fibers can be easily defibrated by the physical defibration treatment.

As described above, in the present manufacturing method, the ozone treatment step S31 and the defibration treatment step S32 are continuously performed a plurality of times, which makes it possible to remove lignin or hemicellulose to the deeper part of the pulp fibers and to perform the defibration while decreasing the lignin content to 0.10 mass% or less and the hemicellulose content to less than 8.0 mass%, respectively. Accordingly, this makes it possible to efficiently manufacture high-quality cellulose nanofibers having a nano-order size and high dispersibility or transparency. In addition, since no catalyst such as an N-oxyl compound is used in the present manufacturing method, the manufactured cellulose nanofibers do not contain a catalyst such as a toxic N-oxyl compound, and accordingly, safety or environmental aspect of the cellulose nanofibers can be improved.

Next, cellulose nanofibers according to an embodiment will be described. The cellulose nanofibers of the present embodiment contains fibrous cellulose. The hemicellulose content of the cellulose nanofibers is less than 8.0 mass%, preferably less than 4.0 mass%, and more preferably less than 2.0 mass%. In addition, the lignin content is 0.10 mass% or less, preferably 0.08 mass% or less, and more preferably 0.06 mass% or less. The fibrous cellulose is chemically modified only by oxidation without the counter ion.

As described above, in the cellulose nanofibers, the fibrous cellulose is chemically modified only by oxidation without counter ions. Here, the chemical modification by only the oxidation without the counter ion means that the primary hydroxyl group (-CH₂OH) of cellulose is selectively converted (oxidized) into a carboxy group (-COOH). On the other hand, in the chemical modification of cellulose by TEMPO oxidation with a catalyst of an N-oxyl compound, the primary hydroxyl group (-CH₂OH) of cellulose is selectively converted into the sodium salt of the carboxy group (-COOH), and accordingly, the counter ion (for example: a Na ion) is bonded to the converted carboxy group. Accordingly, the cellulose nanofibers are not formed using a modifying agent such as a catalyst such as a toxic N-oxyl compound and accordingly, since the cellulose nanofibers do not include such a modifying agent, the cellulose nanofibers can be safely used. In addition, since the hemicellulose content is less than 8.0 mass% and the lignin content is 0.10 mass% or less, these can be referred to as cellulose nanofibers having high dispersibility and transparency. Therefore, the present cellulose nanofibers can be referred to as high-quality cellulose nanofibers that can be used for a broad range of applications.

However, the cellulose content, the hemicellulose content, and the lignin content of in the pulp fibers or cellulose nanofibers (containing fibrous cellulose) can be measured by a well-known detergent analysis method.

As a preferable aspect of the present embodiment, the fibrous cellulose has a specific surface area of 200 to 250 cm². Here, in a case where the pulp fibers are converted into the cellulose nanofibers by only a physical defibration treatment, the specific surface area is generally less than 200 cm². On the other hand, in a case of oxidizing cellulose by TEMPO using a catalysts containing N-oxyl compound, the specific surface area is 250 cm² or more. Accordingly, since the cellulose nanofibers of the present embodiment are not formed by using a modifying agent such as a catalyst having toxic N-oxyl compound, high-performance cellulose nanofibers close to TEMPO oxidation while being safe can be realized at low cost. That is, in the present cellulose nanofibers, since the specific surface area of fibrous cellulose is high and the price is low, these can be referred to as high-quality cellulose nanofibers that can be used for a broader range of applications.

In addition, as a preferable aspect of the present embodiment, 50% or more, preferably 60% or more, more preferably 70% or more of the fibrous cellulose has a fiber diameter of 1 to 10 nm. This can be referred to as cellulose nanofibers having high dispersibility and transparency. Therefore, the present cellulose nanofibers can be referred to as cellulose nanofibers having higher quality.

As for the fiber diameter of the cellulose nanofibers (containing fibrous cellulose), a scanning probe microscope (manufactured by Shimadzu Corporation, product name: SPM-9700HT) was used, and the fiber diameter of 100 or more fibers was measured in a region having a scanning range of 2 µm square, and the fiber diameter distribution was determined. Accordingly, in the present embodiment, it was found that, in a fiber diameter distribution, there is a peak value in a range of the fiber diameter of 4 to 8 nm, and 50% of the total number of fibers falls in the range of the fiber diameter of 1 to 10 nm.

In a preferable aspect of the present embodiment, fibrous cellulose of the cellulose nanofibers contains acid. In a case where the fibrous cellulose contains citric acid, since the cellulose nanofibers have a weak acidity, an antimicrobial effect can be obtained and, at the same time, skin roughness can be suppressed in applications that come into contact with the skin surface of humans. Examples of an aspect in which the cellulose contains acid include a case where the acid is attached to a surface of the cellulose, a case where the acid enters gaps between a plurality of celluloses, and the like. In addition, in a case where the cellulose contains another kind of acid, a function of the acid can be exhibited.

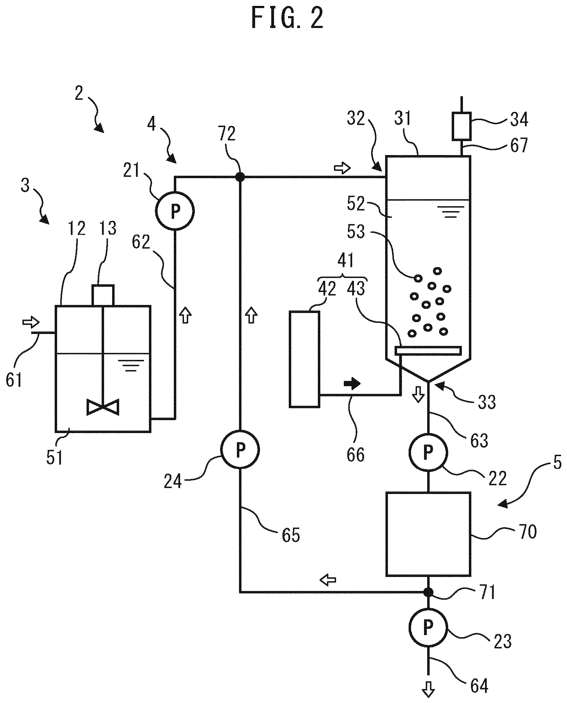

Next, an apparatus for the ozone treatment step S31 and the defibration treatment step S32 will be described. FIG. 2 is a schematic view showing an example of a configuration of an apparatus which executes both the ozone treatment step S31 and the defibration treatment step S32. An apparatus 2 includes a liquid mixture storage unit 3 which stores a liquid mixture 51 containing water and pulp fibers, an ozone treatment unit 4 which executes the ozone treatment step S31 on the pulp fibers in the liquid mixture 51, and a defibration treatment unit 5 which executes the defibration treatment step S32 on the pulp fibers after the ozone treatment. In the apparatus 2, the pulp fibers are circulated through a set of the ozone treatment unit 4 and the defibration treatment unit 5 a plurality of times, thereby executing the ozone treatment step S31 and the defibration treatment step S32 a plurality of times.

The liquid mixture storage unit 3 includes a liquid mixture tank 12 and a stirrer 13. The liquid mixture tank 12 stores the liquid mixture 51 supplied through a pipe 61. The stirrer 13 stirs the liquid mixture 51 so that the pulp fibers in the liquid mixture 51 in the liquid mixture tank 12 do not sink below the liquid mixture 51.

The ozone treatment unit 4 includes a pump 21, a treatment tank 31, an ozone supply device 41, a pump 22, and an ozone decomposition device 34. The pump 21 is installed in the middle of a pipe 62 which connects the liquid mixture storage unit 3 and the treatment tank 31 with each other, and supplies the liquid mixture 51 in the liquid mixture tank 12 to the treatment tank 31 at a first flow rate. The treatment tank 31 has an acidic aqueous solution (first aqueous solution) as the treatment liquid 52, and is a tank in which the ozone treatment is executed. A liquid mixture supply port 32 to which the liquid mixture 51 in the liquid mixture tank 12 is supplied is installed in an upper part or a lower part of the treatment tank 31, and a treatment liquid discharge port 33 which discharges the pulp fibers after ozone treatment together with the treatment liquid 52 is arranged in the lower part or the upper part of the treatment tank 31. The ozone supply device 41 supplies an ozone-containing gas 53 for the ozone treatment to the treatment tank 31. The ozone supply device 41 includes an ozone generation device 42 and an ozone-containing gas supply unit 43 which are connected to each other through a pipe 66. The ozone generation device 42 generates the ozone-containing gas 53 and supplies the ozone-containing gas 53 to the ozone-containing gas supply unit 43. Examples of an ozone generation device 42 include an ozone water exposure tester ED-OWX-2 manufactured by Ecodesign Co., Ltd., an ozone generation device OS-25V manufactured by Mitsubishi Electric Corporation, and the like. The ozone-containing gas 53 is another type of gas containing ozone, and examples thereof include an oxygen gas or air gas containing ozone. The ozone-containing gas supply unit 43 is arranged in a lower part (preferably a bottom part) of the treatment tank 31, and delivers the ozone-containing gas 53 supplied from the ozone generation device 42 into the treatment tank 31. The ozone-containing gas supply unit 43 supplies the ozone-containing gas 53 as a plurality of fine bubbles into the treatment liquid 52 from the lower part to the upper part of the treatment tank 31. The pump 22 is installed in the middle of a pipe 63 which connects the treatment tank 31 and the defibration treatment unit 5 with each other, and discharges the treatment liquid 52 in the treatment tank 31 to the defibration treatment unit 5 at a second flow rate. In addition, the treatment liquid 52 in the treatment tank 31 is only the treatment liquid 52 before the start of the ozone treatment step S31, and is a liquid mixture of the treatment liquid 52 and the liquid mixture 51 after the start thereof. In the present embodiment, the liquid in the treatment tank 31, which is not only the treatment liquid 52 but also the liquid mixture of the treatment liquid 52 and the liquid mixture 51, is defined as the treatment liquid 52. The ozone decomposition device 34 receives the ozone-containing gas 53 accumulated in the upper part of the treatment tank 31 through the pipe 67, and detoxifies and releases the ozone to the outside.

The defibration treatment unit 5 includes a defibration unit 70, a pump 23, and a pump 24. The defibration unit 70 performs a physical defibration treatment on the ozone-treated pulp fibers in the treatment liquid 52. As the defibration unit 70, for example, a disk-type refiner can be used. The pump 23 is installed in the middle of the pipe 64 which connects the defibration unit 70 and another apparatus (for example, a separation apparatus), and delivers the treatment liquid 52 of the defibration unit 70 to another apparatus. The pump 24 is installed in the middle of a pipe 65 which connects a three-way branch 71 (for example, a three-way valve) of the pipe 64 and a three-way branch 72 (for example, a three-way valve) of the pipe 62, and supplies the treatment liquid 52 of the defibration unit 70 to the treatment tank 31 again.

Next, specific examples of the ozone treatment step S31 and the defibration treatment step S32 using the apparatus 2 of FIG. 2 will be described. The pulp fibers are mixed with water so as to have a predetermined concentration, and then supplied as the liquid mixture 51 to the liquid mixture tank 12 through the pipe 61 and stored. Since a specific gravity of the pulp fibers is larger than 1, the liquid mixture 51 is stirred by the stirrer 13 in the liquid mixture tank 12 so that the pulp fibers do not precipitate.

First, the ozone treatment step S31 is specifically executed as follows, for example. The flow rate of the liquid mixture 51 in the liquid mixture tank 12 is controlled by the pump 21, and the liquid mixture 51 is supplied to the treatment tank 31 at the first flow rate from the liquid mixture supply port 32 through the pipe 62. The treatment liquid 52 is an acidic aqueous solution and has a specific gravity of approximately 1. Accordingly, the pulp fibers settle from the upper part toward the lower part of the treatment liquid 52. Meanwhile, the ozone-containing gas 53 generated by the ozone generation device 42 is supplied to the treatment tank 31 through the pipe 66 and discharged in a state of fine bubbles (for example, microbubbles or nanobubbles) into the treatment liquid 52 from the ozone-containing gas supply unit 43 of the treatment tank 31. That is, the ozone-containing gas 53 rises from the lower part to the upper part of the treatment liquid 52.

Then, in the treatment liquid 52, the pulp fibers which fall and the ozone-containing gas 53 which rises collide with each other while advancing opposite to each other. The ozone-containing gas 53 is attached to the surface of the pulp fibers. The ozone in the ozone-containing gas 53 oxidizes and decomposes the lignin or hemicellulose and dissolves it in the treatment liquid 52. Accordingly, the lignin or hemicellulose of the pulp fibers is reduced. The pulp fibers fall to the bottom portion of the treatment tank 31, and the ozone-containing gas 53 is released to a space on the upper part of the treatment tank 31. Accordingly, the ozone-treated pulp fibers are generated. In addition, the pulp fibers may rise due to movement of the treatment liquid 52 in the treatment tank 31.

Next, the defibration treatment step S32 is specifically executed as follows, for example. After the ozone treatment step S31, the treatment liquid 52 (containing the ozone-treated pulp fibers) at the bottom part of the treatment tank 31 is delivered to the defibration unit 70 of the treatment tank 31 from the treatment liquid discharge port 33 of the treatment tank 31 through the pipe 63 at the second flow rate by the control of the flow rate of the pump 22.

Next, the treatment liquid 52 (containing the ozone-treated pulp fibers) supplied to the defibration unit 70 is subjected to the defibration treatment once or a plurality of times in the defibration unit 70. Then, in a case where the ozone treatment step S31 is executed again, the treatment liquid 52 (containing the defibrated pulp fibers) is supplied again to the treatment tank 31 from the liquid mixture supply port 32 through the pipes 64, 65, and 62 by the control of a flow direction in the three-way branches 71 and 72 and the control of the flow rate of the pump 24. On the other hand, in a case where the ozone treatment step S31 is not executed, the treatment liquid 52 (containing the defibrillated pulp fibers) is delivered to another apparatus through the pipe 64 by the control of the flow direction in the three-way branches 71 and 72 and the control of the flow rate of the pump 23.

Here, it is preferable that the first flow rate and the second flow rate are the same. By setting the first flow rate and the second flow rate to be the same, the amount of the treatment liquid 52 in the treatment tank 31 and the defibration unit 70 can be maintained constant, and stable and continuous treatment can be performed. However, in a case where the amount of the treatment liquid 52 in the treatment tank 31 and the defibration unit 70 can be maintained substantially constant, that is, unless the amount of the treatment liquid 52 in the treatment tank 31 and the defibration unit 70 is significantly increased or decreased, the first flow rate and the second flow rate may fluctuate over time. That is, the first flow rate and the second flow rate do not have to be completely the same at all times, and may be substantially the same on average over time. Here, the expression, substantially the same means that a difference between the first flow rate and the second flow rate is within 5 mass%. In this case as well, this enables to embody stable and continuous treatment.

The concentration of ozone in the treatment liquid 52 (aqueous solution) is measured by the following method.
(1) In a 100 mL graduated cylinder containing approximately 0.15 g of potassium iodide and 5 mL of a 10% citric acid solution, 85 mL of the treatment liquid 52 in which ozone is dissolved is put and reacted.
(2) The treatment liquid 52 after the reaction is moved to a 200 mL Erlenmeyer flask, a starch solution is added into the Erlenmeyer flask, the mixture is colored in purple, and then titrated while stirring until it turns to be colorless with 0.01 mol/L sodium thiosulfate, and the added amount a (mL) is recorded.
(3) The concentration of ozone in the aqueous solution is calculated using the following equation. The concentration of ozone in the aqueous solution (mass ppm) is calculated by the following equation: concentration of ozone in the aqueous solution (mass ppm) = a (mL) × 0.24 × 0.85 (mL).

The ozone concentration in the ozone-containing gas 53 is preferably 40 to 200 g/m³, more preferably 40 to 150 g/m³, and even more preferably 40 to 100 g/m³. In a case where the ozone concentration in the ozone-containing gas 53 is extremely low, there is a risk that the superabsorbent polymers cannot be completely solubilized, and the superabsorbent polymers may remain. In a case where the concentration in the ozone-containing gas 53 is extremely high, there is a risk that it may cause damage to pulp fibers, a deterioration in safety, and an increase in production cost. The ozone concentration in the ozone-containing gas 53 can be measured by, for example, an ultraviolet absorption type ozone concentration meter (for example, manufactured by EcoDesign, Inc.: ozone monitor OZM-5000G).

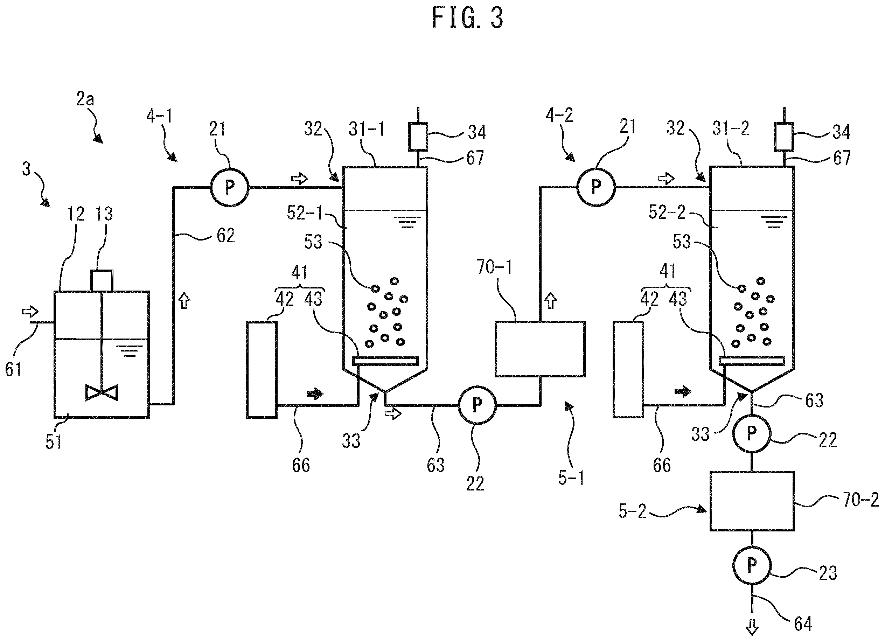

Next, another specific example of the ozone treatment step S31 and the defibration treatment step S32 will be described. FIG. 3 is a schematic view showing another example of a configuration of an apparatus which executes both the ozone treatment step S31 and the defibration treatment step S32. An apparatus 2a includes a liquid mixture storage unit 3, an ozone treatment unit 4-1, a defibration treatment unit 5-1, and an ozone treatment unit 4-2, and a defibration treatment unit 5-2. In the apparatus 2a, a plurality of sets (two sets in the example of FIG. 3) of the ozone treatment unit 4 and the defibration treatment unit 5 are connected in series, thereby executing the ozone treatment step S31 and the defibration treatment step S32 a plurality of times.

The apparatus 2a (FIG. 3) is different from the apparatus 2 (FIG. 2) in that two ozone treatment units 4 and two defibration treatment units 5 are joined in series. In other words, the apparatus 2a is different from the apparatus 2 in that a set of a first treatment tank 31-1 and a first defibration unit 70-1 and a set of a second treatment tank 31-2 and a second defibration unit 70-2 are joined in series. In that case, for example, the first treatment tank 31-1 is supplied with the liquid mixture 51 and delivers a first treated liquid (treatment liquid 52-1 of the first defibration unit 70-1), and the second treatment tank 31-2 is supplied with the first treated liquid and discharges a second treated liquid (treatment liquid 52-2 of the second defibration unit 70-2), thereby treating the pulp fibers of the liquid mixture 51 at multiple stages. In such a case the treatment is easily controlled, compared to the case of FIG. 2 where the treatment tank 31 and the defibration unit 70 are provided as one set and these are used a plurality of times.

In a preferable aspect of the present embodiment, the first aqueous solution containing the pulp fibers subjected to the ozone treatment step S31 (for example, the treatment liquid 52 containing the pulp fibers after the ozone treatment) is supplied to the defibration treatment step S32 as the second aqueous solution as it is, which makes it possible to continuously perform both treatment steps. Accordingly, this makes it possible to efficiently perform the defibration treatment, to make it possible to efficiently manufacture high-quality cellulose nanofibers.

In a preferable aspect of the present embodiment, the second aqueous solution containing the pulp fibers subjected to the defibration treatment step S32 (for example, the treatment liquid 52 containing the pulp fibers after the defibration treatment) is supplied to the ozone treatment step S31 as the first aqueous solution as it is, which makes it possible to continuously perform both treatment steps. Therefore, the ozone treatment can be efficiently performed, which makes it possible to efficiently manufacture high-quality cellulose nanofibers.

In a preferable aspect of the present embodiment, the concentration of the pulp fibers in the first aqueous solution and the second aqueous solution is 1 to 20 mass%, which makes it possible to broadly disperse the pulp fibers in the aqueous solution. Accordingly, this makes it possible to efficiently perform the ozone treatment of the ozone treatment step S31 and the defibration treatment of the defibration treatment step S32, to make it possible to efficiently manufacture high-quality cellulose nanofibers.

In a preferable aspect of the present embodiment, the first aqueous solution used in the ozone treatment step S31 is acidic or neutral. Accordingly, this makes it less likely to deactivate ozone, which makes it possible to more accurately oxidize, decompose, and remove lignin and the like. Accordingly, this makes it possible to efficiently manufacture high-quality cellulose nanofibers.

Next, as another aspect of the embodiment, a case where the pulp fibers are pulp fibers used in a sanitary product, that are, pulp fibers derived from a used sanitary product will be described. In this aspect, the supply step S10 is a step of separating the pulp fibers from the used sanitary product and supplying the pulp fibers as pulp fibers.

First, the used sanitary product will be described. The used sanitary product refers to a sanitary product used by a user and includes a sanitary product in a state of having absorbed and held user's excrement and a sanitary product that has been used but does not absorb and hold any excrement, or a sanitary product that has not been used, but discarded. Examples of the sanitary product include a paper diaper, an incontinence pad, a sanitary napkin, a bed sheet, and a pet sheet, and the absorbent article includes pulp fibers and may include superabsorbent polymers.

Next, a configuration example of the sanitary product will be described. The sanitary product includes a top sheet, a back sheet, and an absorbent body arranged between both sheets. A size of the sanitary product is, for example, approximately 15 to 100 cm in length and 5 to 100 cm in width. The sanitary product may further include another member included in ordinary sanitary product, for example, a diffusion sheet, a leakproof wall, a side sheet, or the like.

Examples of a configuration member of the top sheet include a liquid-permeable nonwoven fabric, a synthetic resin film having a liquid-permeating hole, a composite sheet thereof, and the like. Examples of a configuration member of the back sheet include a liquid-impermeable nonwoven fabric, a liquid-impermeable synthetic resin film, and a composite sheet thereof. Examples of a configuration member of the diffusion sheet include a liquid-permeable nonwoven fabric. Examples of a configuration member of the leakproof wall or the side sheet include a liquid-impermeable nonwoven fabric, and the leakproof wall may include an elastic member such as rubber thread. The material of the nonwoven fabric or the synthetic resin film is not particularly limited as long as the material can be used as sanitary product, and examples thereof include an olefin-based resin such as polyethylene or polypropylene, a polyamide-based resin such as 6-nylon or 6, 6-nylon, a polyester-based resin such as polyethylene terephthalate or polybutylene terephthalate, and the like. As the material of the nonwoven fabric, a natural fiber such as cotton or rayon may be used. In the present embodiment, a sanitary product for which a film is used as the back sheet and a nonwoven fabric is used as the top sheet will be described as an example.

Examples of a configurating members of the absorbent body include an absorbent core (for example, pulp fibers and superabsorbent polymers) and a core wrap. The pulp fibers are not particularly limited as long as they can be used as a sanitary product, and examples thereof include cellulosic fibers. Examples of the cellulosic fiber include a wood pulp, a crosslinked pulp, and a non-wood pulp, a regenerated cellulose, a semi-synthetic cellulose, and the like. The superabsorbent polymer (SAP) is not particularly limited as long as it can be used as a sanitary product, and examples thereof include polyacrylate-based, polysulfonate-based, and maleic anhydride-based polymers.

One surface and the other surface of the absorbent body are joined to the top sheet and the back sheet, respectively, via an adhesive. In a plan view, a peripheral portion of the top sheet which extends to an outer side of the absorbent body so as to surround the absorbent body is bonded to a peripheral portion of the back sheet which extends to an outer side of the absorbent body to surround the absorbent body via an adhesive. Therefore, the absorbent body is wrapped inside the joined body of the top sheet and the back sheet. The adhesive is not particularly limited as long as the adhesive can be used as a sanitary product, and examples thereof include a hot-melt adhesive.

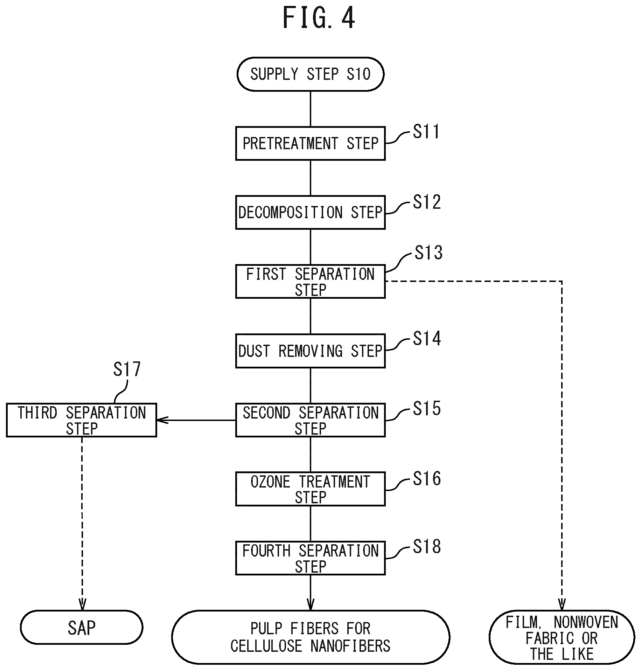

Next, the supply step S10 of separating pulp fibers from the used sanitary product and supplying the pulp fibers according to another aspect of the embodiment will be described. The supply step S10 is not particularly limited, as long as it can supply the pulp fibers derived from the used sanitary product, and any method can be used. As such a step, for example, a step shown below will be described with reference to FIG. 4.

FIG. 4 is a flow chart showing an example of the supply step S10 according to the embodiment. In the supply step S10, a film and nonwoven fabric or the like, superabsorbent polymers (SAP) and pulp fibers are separated from the used sanitary product and supplied. The supply step S10 includes a pretreatment step S11 to a fourth separation step S18 (FIG. 4).

Here, the used sanitary product is collected and acquired from the outside for reuse (recycling). At that time, a plurality of used sanitary products are enclosed in a collection bag so that excrement, bacteria, or odors do not leak to the outside. Each of the used sanitary products in the collection bag is in a state of being rounded or folded such that the top sheet, onto which excrement is excreted, faces inward so as to prevent the excrement or the bacteria from being exposed toward the surface and the odors from diffusing toward the surrounding.

In the pretreatment step S11, the collection bag is supplied into a solution tank which stores an inactivation aqueous solution, and a hole is opened in the collection bag with a tearing blade. Accordingly, a first liquid mixture including the inactivation aqueous solution and the collection bags into which the inactivation aqueous solution has intruded through the holes is generated.

Here, the inactivation aqueous solution will be described. The inactivation aqueous solution inactivates the superabsorbent polymers that are contained in the used sanitary product. The inactivated superabsorbent polymers deteriorate in the capability of retaining water and releases water that has been absorbed. Examples of the inactivation aqueous solution include an acidic aqueous solution. An acid in the acidic aqueous solution is not particularly limited, and examples thereof include an inorganic acid and an organic acid. Examples of the inorganic acid include sulfuric acid, hydrochloric acid, and nitric acid, and sulfuric acid is preferable from the viewpoint of not containing chlorine. Examples of the organic acid include a carboxylic acid having a plurality of carboxyl groups (for example, citric acid, tartaric acid, malic acid, succinic acid, or oxalic acid), a carboxylic acid having one carboxyl group (for example, gluconic acid, pentanoic acid, butanoic acid, propionic acid, glycolic acid, acetic acid, or formic acid), a sulfonic acid (for example, methanesulfonic acid, trifluoromethanesulfonic acid, benzenesulfonic acid, or p-toluenesulfonic acid), and the like. As the organic acid, an organic acid having a plurality of carboxyl groups is preferable and citric acid is more preferable from the viewpoint of likelihood of forming a chelate complex with a divalent or higher metal (for example, calcium) contained in excrement or the like and a difficulty in leaving ash in the superabsorbent polymers and the pulp fibers. The citric acid concentration of the acidic aqueous solution is not particularly limited, but is preferably 0.5 to 4 mass%. Hereinafter, a case where an acidic aqueous solution is used as the inactivation aqueous solution will be described as an example.

In the decomposition step S12, the first liquid mixture is supplied to a biaxial crusher (for example, a biaxial rotary crusher), and the collection bag is crushed as the entire collection bag in the inactivation aqueous solution (acidic aqueous solution). Accordingly, a second liquid mixture containing the crushed matters of the collection bag containing the used sanitary products and the acidic aqueous solution is generated, and the super absorbent polymers of the used sanitary products are inactivated. Here, the crushed matters contain the pulp fibers, the super absorbent polymers, and other materials (films, nonwoven fabrics, collection bag, and the like).

Here, the acidic aqueous solution has a predetermined pH that is acidic (lower than 7.0) and preferably lower than 7.0. The upper limit of the pH is preferably 4.0 and more preferably 3.5. When the pH is too high, the superabsorbent polymers are not sufficiently inactivated, and discharge of excrement held by the superabsorbent polymers is likely to become insufficient. The lower limit of the pH is preferably 0.5 and more preferably 1.0. When the pH is too low, the pulp fibers are likely to be damaged. Here, the pH means a value at 25°C. The pH can be measured using, for example, a pH meter (AS-711 manufactured by HORIBA Co., Ltd.). In addition, the temperature of the acidic aqueous solution is not particularly limited and is, for example, room temperature (25°C), preferably a temperature higher than room temperature, more preferably 60°C to 95°C, and still more preferably 70°C to 90°C. In the case of a high temperature, it becomes easy to sterilize bacteria derived from excrement or the like that is contained in the acidic aqueous solution with the acid in the acidic aqueous solution.

In the first separation step S13, the second liquid mixture is supplied to a pulper separator, and the pulp fibers, the super absorbent polymers, the excrement, and the acidic aqueous solution are separated from the second liquid mixture. Accordingly, a third liquid mixture containing the pulp fibers, the super absorbent polymers, the excrement, and the acidic aqueous solution is generated, and the films, the nonwoven fabrics from the used sanitary products, the materials of the collection bag, and the like are collected.

The pretreatment step S 11 and the decomposition step S12 inactivate the super absorbent polymers of the used sanitary products in the inactivation aqueous solution, which can be referred to as an inactivation step. In addition, in the decomposition step S12, the used sanitary products may not be crushed in the inactivation aqueous solution, and, for example, the used sanitary products may be crushed in air. In such a case, in the first separation step S13, the crushed matters and the inactivation aqueous solution are mixed, and the super absorbent polymers are inactivated. Therefore, the first separation step S13 can be referred to as an inactivation step.

In a dust removing step S14, a third liquid mixture is supplied to the dust removing apparatus, and the pulp fibers, the super absorbent polymers, the excrement, and the acidic aqueous solution are separated from the third liquid mixture. Accordingly, a fourth liquid mixture containing the pulp fibers, the super absorbent polymers, the excrement, and the acidic aqueous solution is generated, and other materials (foreign matters) are collected. Examples of the dust removing apparatus include a screen separator (separation according to size) and a cyclone separator (separation according to specific gravity), and a single dust removing apparatus may be used or a plurality of dust removing apparatuses connected in series may be used.

In a second separation step S15, the fourth liquid mixture is supplied to a drum screen separator, and the super absorbent polymers, the excrement, and the acidic aqueous solution are separated from the fourth liquid mixture. Accordingly, a fifth liquid mixture containing the super absorbent polymers, the excrement, and the acidic aqueous solution is generated, and pulp fibers are collected.

In a third separation step S17, the fifth liquid mixture is supplied to an inclined screen separator, and the excrement and the acidic aqueous solution are separated from the fifth liquid mixture. Accordingly, the super absorbent polymers (SAP) are generated, and the acidic aqueous solution containing the excrement or the like is removed.

In an ozone treatment step S16, the pulp fibers collected in the second separation step S15 are supplied to the treatment tank and mixed with the acidic aqueous solution in the treatment tank. The super absorbent polymers contained in the pulp fibers are decomposed by ozone supplied to the acidic aqueous solution from the lower part of the treatment tank, and are dissolved in the acidic aqueous solution. Accordingly, a sixth liquid mixture containing the pulp fibers from which the super absorbent polymers have been removed and the acidic aqueous solution containing decomposition products of the super absorbent polymers is generated. At this time, the pulp fibers are sterilized or bleached with ozone. The ozone treatment step S16 may be continuously performed a plurality of times from a viewpoint of more reliably performing the decomposition and removal treatment of the super absorbent polymers. The acidic aqueous solution is used from a viewpoint of suppressing the deactivation of ozone and inactivation of the super absorbent polymers. As the acid used in the acidic aqueous solution, organic acid is preferable from a viewpoint of reducing an influence on operators and apparatuses, and, among these, citric acid is preferable from a viewpoint of removing metal.

The ozone concentration in the acidic aqueous solution is preferably 1 to 50 ppm by mass. When the concentration is too low, the superabsorbent polymers cannot be completely solubilized, and there is a risk that the superabsorbent polymers may remain in the pulp fibers. When the concentration is too high, there is a risk that the pulp fibers may be damaged. The treatment time with ozone is shortened in a case where the ozone concentration in acidic aqueous solution is high, and increased in a case where the ozone concentration thereof is low, and is typically 5 to 120 minutes. The product of the ozone concentration (ppm by mass) in the acidic aqueous solution and the treatment time (minutes) (hereinafter, also referred to as a "CT value") is preferably 100 to 6000 ppm·min by mass. When the CT value is too small, the superabsorbent polymers cannot be completely solubilized, and, when the CT value is too large, there is a risk that the pulp fibers may be damaged.

In the fourth separation step S18, a sixth liquid mixture is supplied to the screen separator, and the acidic aqueous solution is separated from the sixth liquid mixture. Accordingly, the pulp fibers are collected and the acidic aqueous solution is removed.

As described above, the pulp fibers can be separated from the used sanitary products, and the collected pulp fibers can be supplied to the subsequent cellulose nanofibers formation step S30 (ozone treatment step S31).

In the supply step S 10, the fourth separation step S 18 may be omitted, and the sixth liquid mixture (pulp fibers and acidic aqueous solution) may be directly supplied to (ozone treatment step S31 of) the cellulose nanofibers formation step S30. Accordingly, this makes it possible to reduce the number of steps and apparatuses. In addition, in the supply step S10 described above, the fourth separation step S18 may be omitted, and the ozone treatment step S16 of the supply step S10 may also be used as the ozone treatment step S31 of the cellulose nanofibers formation step S30. That is, the ozone treatment step S16 of the supply step S10 may be set to the ozone treatment step S31 of the cellulose nanofibers formation step S30, and the defibration treatment step S32 may be performed after the ozone treatment step S16. The process may return to the ozone treatment step S16 (= the ozone treatment step S31) after the defibration treatment step S32. In addition, the ozone treatment unit 4 of the apparatus 2 of FIG. 2 or the ozone treatment unit 4-1 of the apparatus 2a of FIG. 3 may be used in the ozone treatment step S16 and the ozone treatment step S31.

In the present manufacturing method, the pulp fibers derived from the used sanitary product, that are, recycled pulp fibers are used, which makes it possible, not only to use the pulp fibers as a sanitary product, but also to reuse the pulp fibers as the cellulose nanofibers afterwards. That is, the pulp fiber can be efficiently used and can also contribute to reduction of an environmental load. In addition, in a case where the sanitary product contains a super absorbent polymers, the super absorbent polymers may remain in the recycled pulp fibers. However, in the present manufacturing method, since the ozone treatment step S16 or S31 is provided, even in a case where the super absorbent polymers remain in the recycled pulp fibers, the super absorbent polymers can be removed by decomposing and solubilizing the super absorbent polymers by the ozone treatment. In other words, the ozone treatment step S 16 for removing the super absorbent polymers remaining in the recycled pulp fibers can also be used as the ozone treatment step S31. Accordingly, this makes it possible to efficiently manufacture high-quality cellulose nanofibers.

### REFERENCE SIGNS LIST

S31 Ozone treatment step
S32: Defibration treatment step

## Claims

1. A manufacturing method of manufacturing a cellulose nanofibers from a pulp fiber, the method comprising:
an ozone treatment step of performing an ozone treatment on the pulp fiber in a first aqueous solution; and
a defibration treatment step of performing a physical defibration treatment on an ozone-treated pulp fiber in a second aqueous solution, wherein
in the manufacturing method, the ozone treatment step and the defibration treatment step are continuously performed a plurality of times to form the cellulose nanofiber having a hemicellulose content less than 8.0 mass% and a lignin content of 0.10 mass% or less.

2. The manufacturing method according to claim 1, wherein
the ozone treatment step includes a step of supplying the ozone-treated pulp fiber to the defibration treatment step together with the first aqueous solution, and
the defibration treatment step includes a step of defibrating the ozone-treated pulp fiber in the first aqueous solution as the second aqueous solution.

3. The manufacturing method according to claim 1 or 2, wherein
the defibration treatment step includes a step of supplying the defibrated pulp fiber to the ozone treatment step together with the second aqueous solution, and
the ozone treatment step includes a step of performing an ozone treatment on the defibrated pulp fiber in the second aqueous solution as the first aqueous solution.

4. The manufacturing method according to any one of claims 1 to 3, wherein a concentration of the pulp fiber in the first aqueous solution and the second aqueous solution is 1 to 20 mass%.

5. The manufacturing method according to any one of claims 1 to 4, wherein
the pulp fiber includes a kraft pulp fiber.

6. The manufacturing method according to any one of claims 1 to 5, wherein
the pulp fiber includes a pulp fiber derived from a used sanitary product.

7. The manufacturing method according to any one of claims 1 to 6, wherein
the first aqueous solution is acidic or neutral.

8. A cellulose nanofiber containing fibrous cellulose, obtained by the manufacturing method according to any one of claims 1 to 7, wherein
the fibrous cellulose is chemically modified only by oxidation without a counter ion, and
a hemicellulose content is less than 8.0 mass% and a lignin content is 0.10 mass% or less.

9. The cellulose nanofiber according to claim 8, wherein
the fibrous cellulose has a specific surface area of 200 to 250 cm².

10. The cellulose nanofiber according to claim 8 or 9, wherein
50% or more of the fibrous cellulose has a fiber diameter of 1 to 10 nm.

11. The cellulose nanofiber according to any one of claims 8 to 10, wherein
the fibrous cellulose contains an acid.

12. The cellulose nanofiber according to any one of claims 8 to 11, wherein
the fibrous cellulose is derived from a pulp fiber of a used sanitary product.

## Patentansprüche

1. Herstellungsverfahren zur Herstellung einer Cellulose-Nanofaser aus einer Zellstofffaser, wobei das Verfahren Folgendes umfasst:
einen Ozonbehandlungschritt zur Durchführung einer Ozonbehandlung der Zellstofffaser in einer ersten wässrigen Lösung; und
einen Zerfaserungsbehandlungsschritt der Durchführung einer physikalischen Zerfaserungsbehandlung einer mit Ozon behandelten Zellstofffaser in einer zweiten wässrigen Lösung, wobei
in dem Herstellungsverfahren der Ozonbehandlungschritt und der Zerfaserungsbehandlungsschritt mehrere Male kontinuierlich durchgeführt werden, um die Cellulose-Nanofaser zu bilden, die einen Hemicellulose-Gehalt von weniger als 8,0 Masse-% und einen Lignin-Gehalt von 0,10 Masse-% oder weniger aufweist.

2. Herstellungsverfahren nach Anspruch 1, wobei
der Ozonbehandlungschritt einen Schritt der Zuführung der mit Ozon behandelten Zellstofffaser zu dem Zerfaserungsbehandlungsschritt zusammen mit der ersten wässrigen Lösung einschließt und
der Zerfaserungsbehandlungsschritt einen Schritt der Zerfaserung der mit Ozon behandelten Zellstofffaser in der ersten wässrigen Lösung als die zweite wässrige Lösung einschließt.

3. Herstellungsverfahren nach Anspruch 1 oder 2, wobei
der Zerfaserungsbehandlungsschritt einen Schritt der Zuführung der zerfaserten Zellstofffaser zu dem Ozonbehandlungschritt zusammen mit der zweiten wässrigen Lösung einschließt und
der Ozonbehandlungschritt einen Schritt der Durchführung einer Ozonbehandlung der zerfaserten Zellstofffaser in der zweiten wässrigen Lösung als die erste wässrige Lösung einschließt.

4. Herstellungsverfahren nach einem der Ansprüche 1 bis 3, wobei eine Konzentration der Zellstofffaser in der ersten wässrigen Lösung und der zweiten wässrigen Lösung 1 bis 20 Masse-% beträgt.

5. Herstellungsverfahren nach einem der Ansprüche 1 bis 4, wobei
die Zellstofffaser eine Kraft-Zellstofffaser einschließt.

6. Herstellungsverfahren nach einem der Ansprüche 1 bis 5, wobei
die Zellstofffaser eine Zellstofffaser einschließt, die von einem benutzten Hygieneartikel stammt.

7. Herstellungsverfahren nach einem der Ansprüche 1 bis 6, wobei
die erste wässrige Lösung sauer oder neutral ist.

8. Cellulose-Nanofaser, die faserige Cellulose enthält, die durch das Herstellungsverfahren nach einem der Ansprüche 1 bis 7 erhalten wird, wobei
die faserige Cellulose nur durch Oxidation ohne ein Gegenion chemisch modifiziert ist und
ein Hemicellulose-Gehalt weniger als 8,0 Masse-% beträgt und ein Lignin-Gehalt 0,10 Masse-% oder weniger beträgt.

9. Cellulose-Nanofaser nach Anspruch 8, wobei
die faserige Cellulose eine spezifische Oberfläche von 200 bis 250 cm² aufweist.

10. Cellulose-Nanofaser nach Anspruch 8 oder 9, wobei
50 % oder mehr der faserigen Cellulose einen Faserdurchmesser von 1 bis 10 nm aufweisen.

11. Cellulose-Nanofaser nach einem der Ansprüche 8 bis 10, wobei
die faserige Cellulose eine Säure enthält.

12. Cellulose-Nanofaser nach einem der Ansprüche 8 bis 11, wobei
die faserige Cellulose von einer Zellstofffaser eines benutzten Hygieneartikels stammt.

## Revendications

1. Procédé de fabrication servant à fabriquer des nanofibres de cellulose à partir d'une fibre de pâte à papier, le procédé comportant :
une étape de traitement à l'ozone consistant à effectuer un traitement à l'ozone sur la fibre de pâte à papier dans une première solution aqueuse ; et
une étape de traitement de défibrage consistant à effectuer un traitement de défibrage physique sur une fibre de pâte à papier traitée à l'ozone dans une deuxième solution aqueuse, dans lequel,
au cours du procédé de fabrication, l'étape de traitement à l'ozone et l'étape de traitement de défibrage sont effectuées en continu une pluralité de fois pour former la nanofibre de cellulose ayant une teneur en hémicellulose inférieure à 8,0 % en masse et une teneur en lignine inférieure ou égale à 0,10 % en masse.

2. Procédé de fabrication selon la revendication 1, dans lequel
l'étape de traitement à l'ozone comprend une étape consistant à fournir la fibre de pâte à papier traitée à l'ozone pour l'étape de traitement de défibrage conjointement avec la première solution aqueuse, et
l'étape de traitement de défibrage comprend une étape de défibrage de la fibre de pâte à papier traitée à l'ozone dans la première solution aqueuse en tant que deuxième solution aqueuse.

3. Procédé de fabrication selon la revendication 1 ou la revendication 2, dans lequel
l'étape de traitement de défibrage comprend une étape consistant à fournir la fibre de pâte à papier défibrée pour l'étape de traitement à l'ozone conjointement avec la deuxième solution aqueuse, et
l'étape de traitement à l'ozone comprend une étape consistant à effectuer un traitement à l'ozone sur la fibre de pâte à papier défibrée dans la deuxième solution aqueuse en tant que première solution aqueuse.

4. Procédé de fabrication selon l'une quelconque des revendications 1 à 3, dans lequel une concentration de la fibre de pâte à papier dans la première solution aqueuse et la deuxième solution aqueuse est de 1 à 20 % en masse.

5. Procédé de fabrication selon l'une quelconque des revendications 1 à 4, dans lequel
la fibre de pâte à papier comprend une fibre de pâte à papier kraft.

6. Procédé de fabrication selon l'une quelconque des revendications 1 à 5, dans lequel
la fibre de pâte à papier comprend une fibre de pâte à papier dérivée d'un produit sanitaire usagé.

7. Procédé de fabrication selon l'une quelconque des revendications 1 à 6, dans lequel
la première solution aqueuse est acide ou neutre.

8. Nanofibre de cellulose contenant de la cellulose fibreuse, obtenue par le procédé de fabrication selon l'une quelconque des revendications 1 à 7, dans laquelle
la cellulose fibreuse est modifiée chimiquement uniquement par oxydation sans contre-ion, et
une teneur en hémicellulose est inférieure à 8,0 % en masse et une teneur en lignine est inférieure ou égale à 0,10 % en masse.

9. Nanofibre de cellulose selon la revendication 8, dans laquelle
la cellulose fibreuse a une surface spécifique allant de 200 à 250 cm².

10. Nanofibre de cellulose selon la revendication 8 ou la revendication 9, dans laquelle
50 % ou plus de la cellulose fibreuse a un diamètre de fibre compris entre 1 et 10 nm.

11. Nanofibre de cellulose selon l'une quelconque des revendications 8 à 10, dans laquelle
la cellulose fibreuse contient un acide.

12. Nanofibre de cellulose selon l'une quelconque des revendications 8 à 11, dans laquelle
la cellulose fibreuse est dérivée d'une fibre de pâte à papier d'un produit sanitaire usagé.
